# EUROPEAN PATENT APPLICATION

(11) **EP 4 049 921 A1**
(43) Date of publication of application: **31.08.2022**
(21) Application number: 20878428.0
(22) Date of filing: 15.10.2020
(51) Int. Cl.: B62K 15/00

(54) **FOLDABLE BICYCLE**

(30) Priority: 23.10.2019 CN 201911010674
(71) Applicant: Pertec Electronics Company Limited, Kowloon, Hong Kong 999077 (CN)
(72) Inventor: KWOK, Yu Ming, Hong Kong 999077 (CN)
(74) Representative: Klunker IP Patentanwälte PartG mbB
(86) International application number: PCT/CN2020/121158
(87) International publication number: WO 2021/078059

(57) **Abstract**

Disclosed is a folding bicycle, including: a front wheel, a rear wheel, a handlebar, a main frame, a support frame, a pedal mechanism, a first safety clamp, and a second safety clamp, the first safety clamp being configured to secure relative position between the support frame and the main frame; and a second rotating shaft is disposed between the through-hole and the position where the main frame joins with the handlebar. The folding bicycle disclosed offers an advantage of portability.

## Description

### FIELD

Embodiments of the disclosure relate to a vehicle, and more particularly relate to a folding bicycle.

### BACKGROUND

Folding bicycle designs are already existent in conventional technologies.

For example, the Chinese Invention Patent Application No.201610242667.1 discloses a folding bicycle, which achieves portability and foldability by splitting the bicycle handlebar into two segments.

For another example, the Chinese Invention Patent Application No.200880018092.9 also discloses a folding bicycle, in which the seat post of the bicycle is formed by multiple coupled segments, whereby implementing folding of the bicycle.

However, conventional folding bicycles mostly focus on folding of the seat post and the handlebar, such that the folding designs are usually applied on bicycles with small-sized, small-diameter tires, which are less comfortable to ride than those with large-diameter tires. Moreover, conventional folding bicycles generally have drawbacks such as low folding-joint strength, and low post-folding cross-sectional area shrinkage.

### SUMMARY

To solve at least part of the technical problems above, an embodiment of the disclosure provides a folding bicycle.

Specifically, the folding bicycle comprises: a front wheel, a rear wheel, a handlebar, a main frame, a support frame, a pedal mechanism, a first safety clamp, and a second safety clamp, wherein the front wheel is connected to the handlebar, the pedal mechanism is connected with the rear wheel via a chain so as to drive the rear wheel to rotate; one end of the support frame is disposed thereon with a saddle, the other end of thereof being connected with the peddle mechanism via a through-hole reserved in the main frame, and one end of the main frame is connected with the handlebar, the other end thereof being connected with the peddle mechanism via a first rotating shaft, such that movement of the support frame along the through-hole may bring the peddle mechanism to rotate along the first rotating shaft, thereby bringing the peddle mechanism and the main frame close to each other, the first safety clamp being configured to secure relative position between the support frame and the main frame; and a second rotating shaft is disposed between the through-hole and the position where the main frame joins with the handlebar, such that the main frame may be bent along the second rotating shaft to bring the front wheel and the rear wheel close to each other, the second safety clamp being configured to secure the main frame to a non-bent state. The folding bicycle provided by the disclosure offers an advantage of portability.

### BRIEF DESCRIPTION OF THE DRAWINGS

To elucidate the technical solutions of the disclosure or the technical solutions of conventional technologies, the drawings used in describing the embodiments of the disclosure or conventional technologies will be briefly introduced below. It is apparent that the drawings as described hereinafter relate to some embodiments of the disclosure. To those skilled in the art, other associated structures not present in the drawings may also be derived based on these drawings without exercise of inventive work, wherein:
Fig. 1 is a structural schematic diagram of a folding bicycle according to an embodiment of the disclosure, which is in a first state;
Fig. 2 is a structural schematic diagram of the folding bicycle in a second state according to an embodiment of the disclosure;
Fig. 3 is an exploded view of a folding bicycle when a wheel body is flipped according to an embodiment of the disclosure;
Fig. 4 is a structural schematic diagram of the folding bicycle in a fourth state according to an embodiment of the disclosure;
Fig. 5 is a structural schematic diagram of the folding bicycle in a fifth state according to an embodiment of the disclosure;
Fig. 6 is a structural schematic diagram of the folding bicycle in a sixth state according to an embodiment of the disclosure;
Fig. 7 is a structural schematic diagram of a male rod insertion manner of the folding bicycle in a seventh state according to an embodiment of the disclosure;
Fig. 8 is a structural schematic diagram of another male rod insertion manner of the folding bicycle in the seventh state according to an embodiment of the disclosure;
Fig. 9 is a structural schematic diagram of a tire folding manner of the folding bicycle in an eighth state according to an embodiment of the disclosure;
Fig. 10 is a structural schematic diagram of another tire folding manner of the folding bicycle in the eighth state according to an embodiment of the disclosure;
Fig. 11 is a schematic diagram of another folding manner of the folding bicycle according to an embodiment of the disclosure.

Reference Numerals:
1. front wheel; 2. rear wheel; 3. handlebar; 31.T-section; 32. grip portion; 33.
fourth rotating shaft; 4. main frame; 43. head segment; 432. second safety clamp; 44.
middle segment; 441. long rod; 442. connecting platform; 443. connecting tongue;
444. revolving member; 445. revolving shaft; 45. tail segment; 451. through-hole;
452. first socket; 453. first safety clamp; 454: fastener; 5. support frame; 51. male rod;
52; female rod; 521: rod base; 522. rod upper portion; 53. third rotating shaft; 6. pedal mechanism; 61.first rotating shaft; 62. first gear; 63.pedal; 64. securing frame; 7. saddle; 71.hand loop; 8. chain; 91. wheel body; 92. connecting element; 94. rail groove; 95. wheel plate axle; 96. securing mechanism.

### DETAILED DESCRIPTION

Inventors of the present application found that main folding parts of a conventional folding bicycle are mainly the handlebar and the seat post; however, after the main frame and the seat post are folded, the two flat-laid wheels still have a large footprint, and post-folding cross-sectional area shrinkage is still undesirable.

Due to the large footprint of wheels, small-diameter tires are extensively equipped in conventional folding bicycles. However, the small-diameter wheel bodies render a poor ride comfort, which sacrifice comfort for folding.

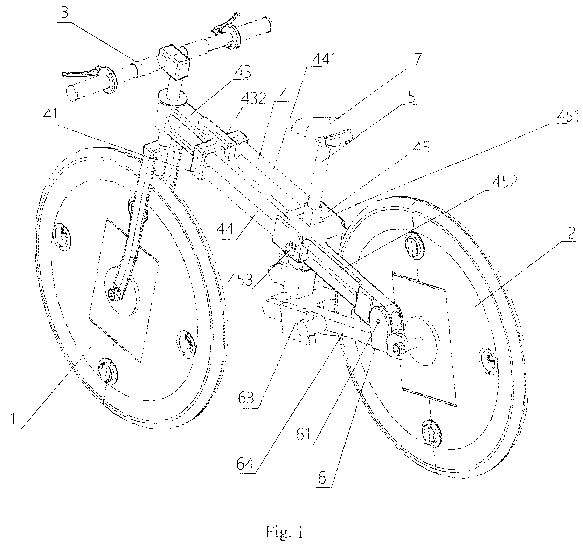

In view of the above drawbacks, embodiments of disclosure provide a folding bicycle, as illustrated in Fig. 1, which substantially have same parts as a conventional bicycle: a front wheel 1, a rear wheel 2, a handlebar 3, a main frame 4, a support frame 5, and a pedal mechanism 6, wherein the front wheel 1 is connected to the handlebar 3, a saddle 7 is disposed on one end of the support frame 5, and the pedal mechanism 6 is connected with the rear wheel 2 via a chain 8 to drive the rear wheel 2 to rotate.

A distinct feature of the disclosure over conventional technologies is that in an embodiment of the disclosure, the other end of the support frame 5 is connected with the pedal mechanism 6 through a through-hole 451 reserved in the main frame 4.

Still referring to Fig. 1, one end of the main frame 4 is connected with the handlebar 3, and the other end of the main frame 4 is connected with the pedal mechanism 6 via a first rotating shaft 61, such that movement of the support frame 5 along the through-hole 451 brings the pedal mechanism 6 to rotate along the first rotating shaft 61, simultaneously bringing the pedal mechanism 6 and the main frame 4 close to each other. It is understood that a first safety clamp 453 may be provided on the main frame 4 or the support frame 5 to secure relative position between the main frame 4 and the support frame 5. The first safety clamp 453 may be a fastening bolt that implements fastening by friction, or may be a common bolt that is inserted into a blind hole or a socket in the support frame 5 to implement fixation. It is understood that the first safety clamp 453 may have other implementations

Meanwhile, a second rotating shaft 41 is provided between the through-hole 451 and the portion on the main frame 4 where the handlebar 3 is joined, such that the main frame 4 can be bent along the second rotating shaft 41 to bring the front wheel 1 and the rear wheel 2 close to each other. Likewise, a second safety clamp 432 may be provided on the main frame 4 so as to secure the main frame 4 to a non-bent state. The second safety clamp 432 may be a fastening device or a screwing device, which also has a variety of implementations, as long as those skilled in the art may unfasten them with bare hands as needed, which will not be detailed here.

Alternatively, in an embodiment of the disclosure, a second gear (not shown) is provided coaxial with the rear wheel 2.

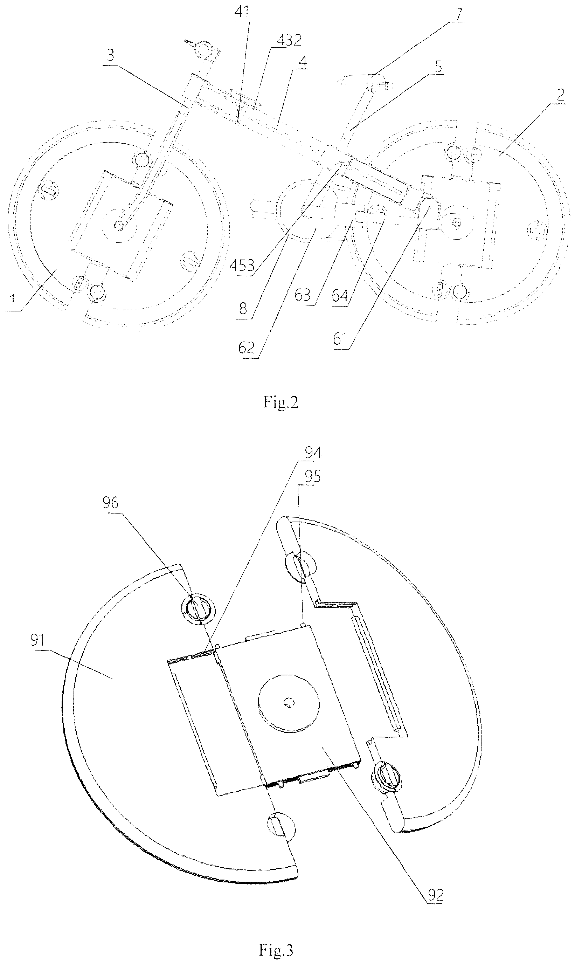

As illustrated in Fig.2, the pedal mechanism 6 may comprise:
a first gear 62, a securing frame 64, and a pedal 63, wherein the pedal 63 is connected on the first gear 62;
the first gear 62 and the second gear are in transmission connection via the chain 8;
two ends of the securing frame 64 are connected on the first gear 62 and the rear wheel 2, respectively, where the first rotating shaft 61 is disposed at a position on the securing frame 64 proximal to the second gear.

By disposing the first rotating shaft 61 at a position on the securing frame 64 proximal to the second gear, the securing frame 64 and the main frame 4 may be brought close to each other till being substantially parallel, which further increases post-folding cross-sectional area shrinkage. In addition, the first rotating shaft 61 disposed at that position offers a better weight-bearing property.

In an alternative embodiment of the disclosure, the front wheel 1 has a first wheel plate and a second wheel plate, the first wheel plate being foldable till a position parallel to the second wheel plate;
and/or, the rear wheel 2 has a third wheel plate and a fourth wheel plate, the third wheel plate being foldable till a position parallel to the fourth wheel plate.
Foldability the wheel plates of the front and rear wheels enables further folding of the bicycle, thereby saving more footprint and further increasing shrinkage.

Referring to Fig. 3. an embodiment of the disclosure provides a folding solution for a bicycle wheel, wherein the bicycle wheel may comprise:
a wheel body 91, including two wheel plates that may be spliced with each other, wherein a notched area is formed when the two wheel places are spliced with each other;
a connecting element 92 arranged in the notched area;
a slide rail mechanism which is at least partially disposed on the connecting element 92 and the remaining parts of which are arranged on respective wheel plates, wherein the slide rail mechanism includes a rail groove 94 and a wheel plate axle 95 embedded in the rail groove 94, such that the two wheel plates are capable of being mutually spliced or split apart via the wheel plate axle 95 along the rail groove 94 and are capable of being flipped via the wheel plate axle 95 relative to the connecting element 92;
a securing mechanism 96 configured to secure the two wheel plates to a mutually spliced state. The two wheel plates may be disposed in a left-right symmetrical manner; correspondingly, the slide rail mechanism may be provided on each of the two wheel plates.

It is understood that the securing mechanism 96 may be implemented in a variety of manners, including clamping, screwing, etc. With screwing as an example, two semi-circular projections may be provided on the two wheel plates, respectively, wherein a threaded hole is provided on each semi-circular projection, the threaded holes being staggered in thickness direction of the wheel plates. When the two wheel plates are spliced, the threaded holes in the two semi-circular projections coincide in the thickness direction, such that a user may lock the two wheel plates by inserting a bolt through both threaded holes.

It is noted that from the perspective of the embodiments of the disclosure, the front and rear wheels may have a variety of foldable forms. Irrespective of how the wheels are folded, as long as the two wheel plates of each wheel may be brought parallel or substantially parallel, they can cooperate better with the folding action of the main frame 4.

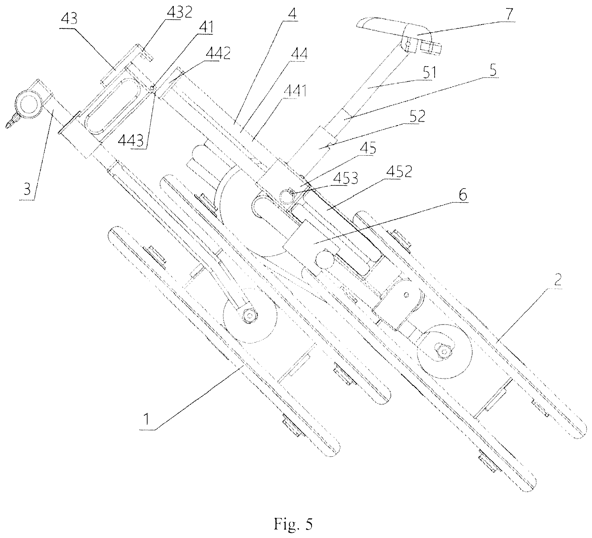

Next, embodiments of the disclosure provide a folding process based on the above structure, wherein the folding process comprises the following steps:
1) Fig. 1 illustrates an initial first state of the bicycle. In this state, the bicycle is fully deployed and ready for ride.
2) Fig. 2 illustrates a second state of the bicycle, wherein the wheels of the bicycle are pulled apart. In this state, the front wheel 1 and the rear wheel 2 of the bicycle may be folded separately. Specific folding methods vary dependent on folding designs of the front wheel 1 and the rear wheel 2, which have been discussed above and thus are not detailed here.
3) The wheels are folded such that the bicycle is in a third state. In this state, the front wheel 1 and the rear wheel 2 of the bicycle may be folded separately, but their folding sequence is not limited.

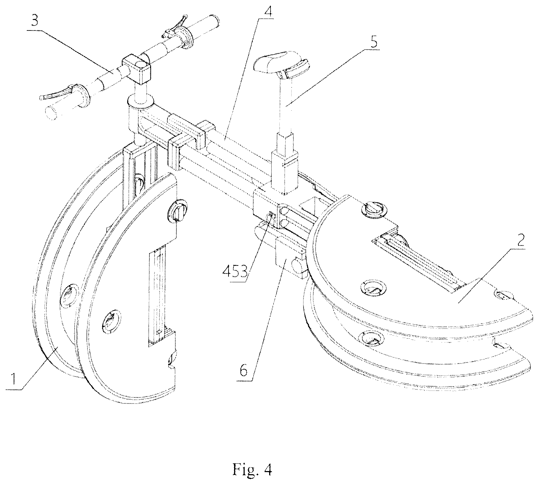

4) Fig. 4 illustrates a fourth state of the bicycle wherein the first safety clamp 453 is unfastened such that the support frame 5 may move freely in the through-hole 451. By pulling the support frame 5 towards the direction of the saddle 7, the pedal mechanism 6 and the main frame 4 may be brought close to each other, and even the main frame 4 may be brought close to be flush against the current-state securing frame 64. Furthermore, the first safety clamp 453 may further secure the relative position between the main frame 4 and the securing frame 64, rendering the bicycle more stable.
5) The second safety clamp 432 is unfastened to cause the main frame 4 to bend. Fig. 5 illustrates a fifth state, wherein after the main frame 4 is bent, the body footprint of the bicycle has been significantly shrunk, which facilitates storage of the bicycle in various spaces, particularly stored in a vehicle trunk.

Compared with conventional technologies, by bending of the main frame 4 and folding of the wheels, the folding bicycle according to the disclosure can significantly increases cross-sectional area shrinkage. In the embodiments of the disclosure, since only the main frame 4. which is the most massive part of the bicycle body is bent, folding-joint strength of the bicycle is better ensured.

It is noted that in the embodiments of the disclosure, the folding wheel renders an increased cross-sectional area shrinkage; however, it is understood that even without folding wheels, bending of the main frame 4 and mutual approaching between the pedal mechanism 6 and the main frame 4 may still achieve a more desirable cross-sectional area shrinkage than conventional technologies, such that the folding bicycle of the disclosure may use large-diameter tires to significantly enhance ride comfort. Of course, with smaller-diameter tires, the footprint of the bicycle becomes even smaller, thereby offering a better portability.

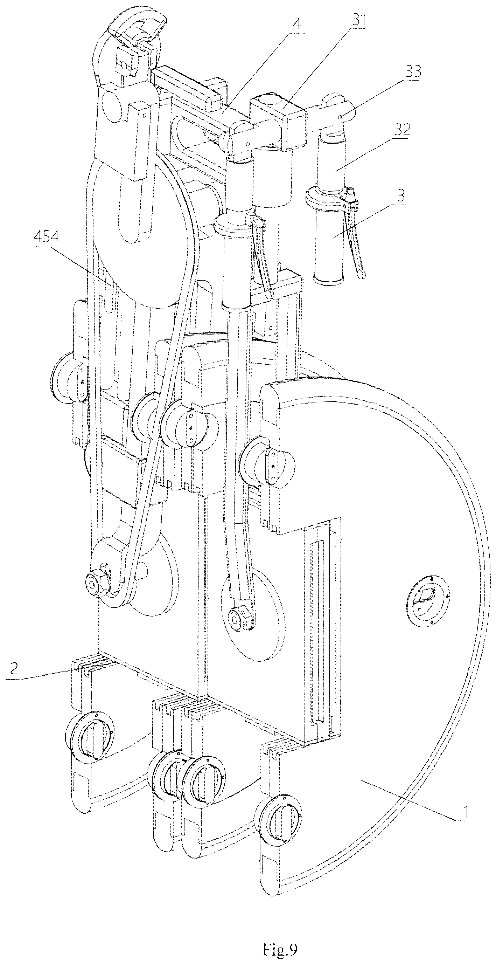

In a further alternative solution in the embodiments of the disclosure, as illustrated in Figs. 1 and 5, the main frame 4 may comprise:
a head segment 43 connected with the handlebar 3;
a middle segment 44 connected with the head segment 43 via the second rotating shaft 41;
a tail segment 45 connected with the pedal mechanism 6;
wherein, as illustrated in Fig. 9, the tail segment 45 has a first socket 452 and is provided with a fastener 454 on a sidewall of the first socket 452, the middle segment 44 being inserted in the first socket 452, wherein an insertion depth of the middle segment 44 in the first socket 452 can be adjusted via the fastener 454. In an alternative embodiment, the fastener 454 may also be integrated with the first safety clamp 453 so as to simplify the structure and reduce operation steps.

In an alternative embodiment of the disclosure, a plurality of the first sockets 452 are provided, wherein the respective first sockets 452 may be uniformly distributed on the cross section of the tail segment 45 or arranged side-by-side at two sides of the cross section. Of course, other structures capable of providing enough weight bearing property are also allowed. Likewise, it may be understood that the first socket 452 may not only be an exposed socket as illustrated in the figure, but also may be an enclosed socket, which may be selected by those skilled in the art as needed.

Furthermore, the through-hole 451 is disposed at the tail segment 45; two first sockets 452 are provided and disposed at two sides of the through-hole 451, respectively; and
the middle segment 44 comprises at least two long rods 441 disposed corresponding to the first sockets 452, respectively.

Additionally, as illustrated in Fig. 5, in an alternative embodiment of the disclosure, the middle segment 44 is provided with a connecting platform 442 and a connecting tongue 443 projecting from the connecting platform 442;
the second rotating shaft 41 passes through the connecting tongue 443 to rotatably connect the middle segment 44 to the head segment 43; and
the second safety clamp 432 is disposed on the head segment 43, for fastening and securing the connecting platform 442.

Connecting by means of platform may ensure a larger contact area to enhance connection stability.

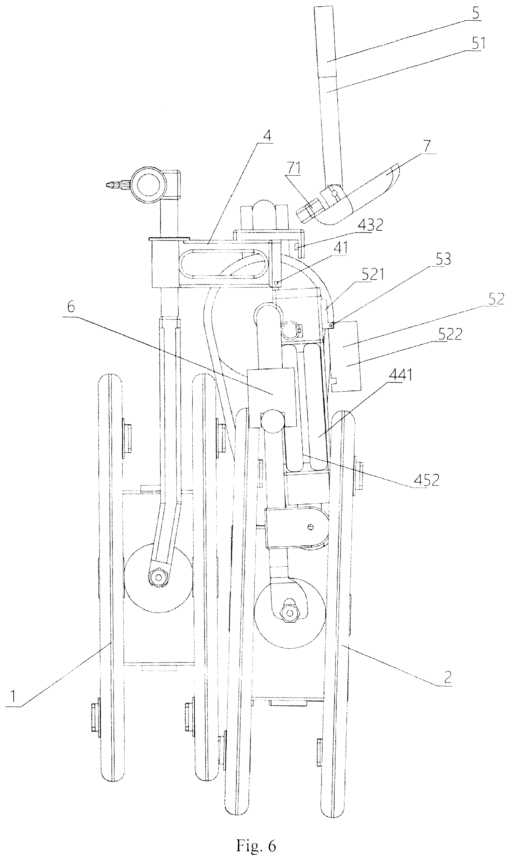

Optionally, as illustrated in Fig. 5, the support frame 5 comprises a female rod 5 and a male rod 51, the saddle 7 being disposed on the male rod 51; and
a second socket is provided on the female rod 52, wherein the male rod 51 is inserted in the second socket to connect with the female rod 52, wherein a locking structure similar to the first safety clamp 453 or of an alternative form may be provided in the female rod 52 so as to secure the connection between the male rod 51 and the female rod 52. As illustrated in Fig. 6, the male rod 51 may be detachably connected to the female rod 52, wherein when the male rod 51 is removed, the cross-sectional area may be further shrunk.

Furthermore, in an alternative embodiment, as illustrated in Fig. 6, the female rod 52 may further comprise a rod base 521 and a rod upper portion 522;

The rod upper portion 522 is connected with the rod base 521 via the third rotating shaft 53, such that when the pedal mechanism 6 is brought flush against the main frame 4, the rod base 521 at least partially exposes the through-hole 451, enabling the rod upper portion 522 to flip relative to the rod base 521 via the third rotating shaft 53.

Optionally, the male rod 51 is removable from the second socket. When the male rod 51 is removed, a hand loop 71 may be disposed on the saddle 7 to facilitate carrying.

Optionally, the relative position between the handlebar 3 and the main frame 4 may be relatively adjusted and secured, the securing principle of which may be similar to that between the support frame 5 and the main frame 4, which is thus not detailed here.

Based on the above structure, the following step may be further added to the above-described folding process:
6) loosening the fastener such that the long rod 441 may move relative to the first socket 452. While the long rod 441 is being inserted deep into the first socket 452, the bicycle changes from the fifth state in Fig. 5 to the sixth state in Fig. 6. In this state, the front wheel 1 and the rear wheel 2 may be disposed substantially side-by-side: which significantly reduces footprint of the folded bicycle in the height direction.

Additionally, in the sixth state, the male rod 51 of the support frame 5 may be removed, and then the rod upper portion 522 is rotated along the third rotating shaft 533, thereby reducing footprint of the folded bicycle in the width direction.

And in the sixth state, the relative position between the handlebar 3 and the main frame 4 may also be adjusted to bring the front wheel 1 and the rear wheel 2 aligned.

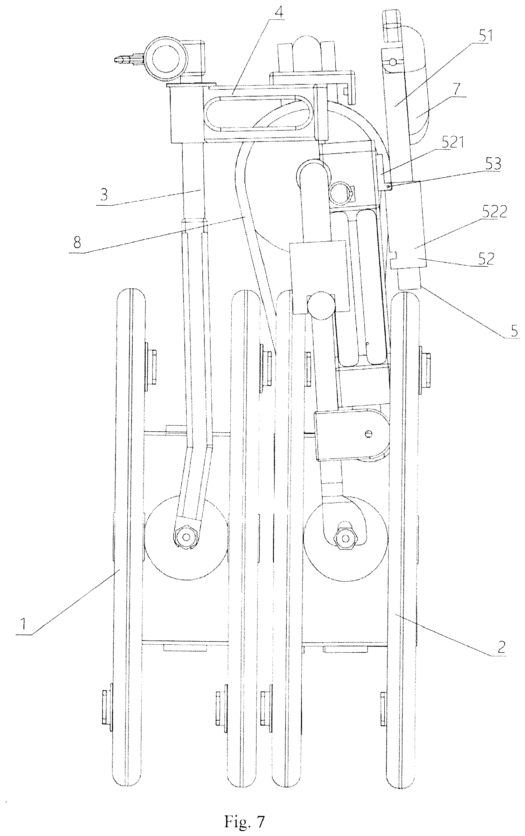

7) as illustrated in Fig. 7, after rotating the rod upper portion 522, the male rod 51 of the support frame 5 may be re-inserted into the female rod 52 along an appropriate direction, such that the bicycle is disposed in a seventh state. In this state, the bicycle is integrated to facilitate carrying.

Additionally, besides adjusting the relative position between the handlebar 3 and the main frame 4, Fig. 7 further schematically illustrates the state after the front wheel 1 and the rear wheel 2 are aligned.

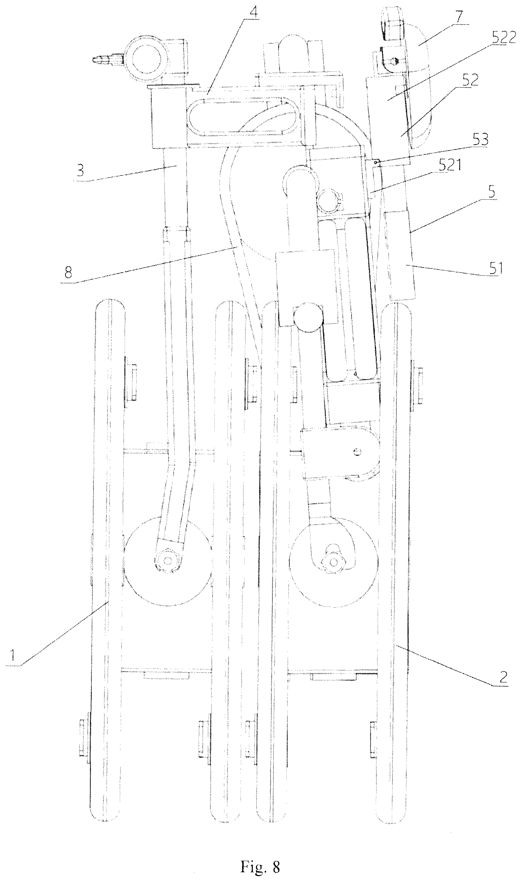

It is noted that as illustrated in Fig. 8, the rod upper portion 522 may not only flip towards the direction close to the rear wheel 2, but also may flip towards the direction distant from the rear wheel 2. Correspondingly, when the rod upper portion 522 flips towards the direction distant from the rear wheel 2, due to enough space having been reserved, the male rod 51 may also be designed undetachable so as to enhance connection strength.

Additionally, in an embodiment of the disclosure, the saddle 7 may also be provided foldable and the split portions of the saddle 7 may be secured relatively at two angles: substantially parallel to each other and substantially perpendicular to each other, thereby further increasing cross-sectional area shrinkage.

Furthermore, in an alternative embodiment, as illustrated in Fig. 9, the handlebar 3 may further comprise a grip portion 32 and a T-section 31;
the T-section 31 is connected with the front wheel 1 and the main frame 4;
the grip portion 32 is connected with the T-section 31 via a fourth rotating shaft 33.

By folding the handlebar 3, the cross-sectional area may be further shrunk.

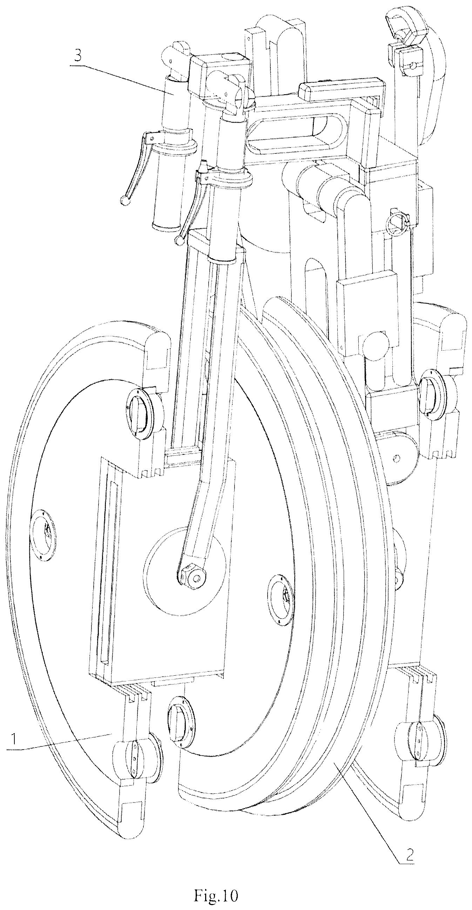

It is noted that from the perspective of the embodiments of the present application, when folding tires are adopted, the front wheel 1 and the rear wheel 2 may be folded towards the same direction as illustrated in Fig. 9 or folded towards different directions as illustrated in Fig. 10; at this point, the bicycle is in an eighth state. The folding principles of other foldable parts are also similar, such that the user may adopt an appropriate folding manner dependent on actual needs.

Additionally, an embodiment of the disclosure further provides an optional solution.

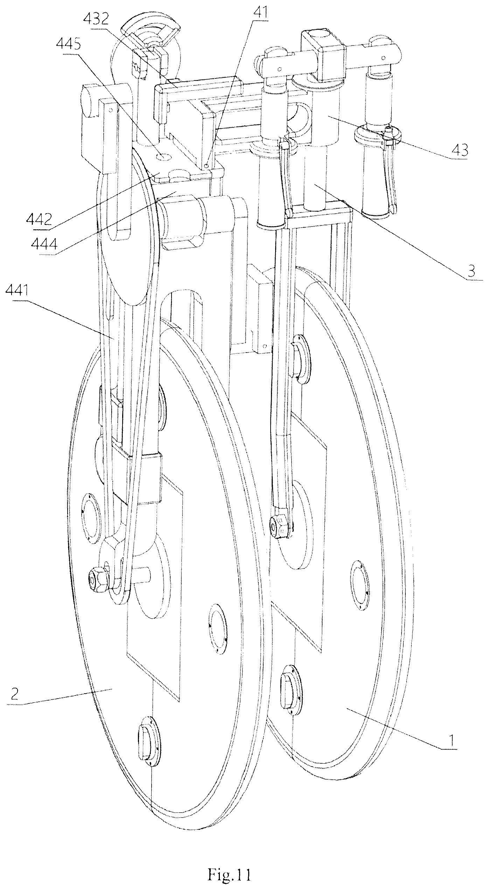

As illustrated in Fig. 11, in this solution, the middle segment 44 optionally further comprises a revolving member 444 that is connected on the connecting platform via a revolving shaft 445, the long rods 441 being connected with the revolving member 444.

In this embodiment, the revolving member 444 can rotate along the revolving shaft 445 to bring the long rod 441 and the handlebar 3 to be disposed substantially parallel.

In this way, based on the above structure, an embodiment of the disclosure provides a further folding process. Compared with the above-described folding process, the wheels of the bicycle need not be folded; instead, after the revolving member 444 rotates along the revolving shaft 445, the front wheel 1 and the rear wheel 2 are brought flush against each other, which may also effectively attain the goal of increasing cross-sectional area shrinkage.

Those of normal skill in the art may understand that many technical details provided in the various embodiments described above are only for facilitating the readers to understand. However, the technical solutions as claimed in the claims of the present application may be still implemented substantially even without these technical details based on various changes and modifications to the embodiments above. Therefore, in actual applications, various alternations to the embodiments may be done in aspects of forms and details without departing from the spirit and scope of the disclosure.

## Claims

1. A folding bicycle, comprising:
a front wheel (1), a rear wheel (2), a handlebar (3), a main frame (4), a support frame (5), a pedal mechanism (6), a first safety clamp (453), and a second safety clamp (432);
wherein the front wheel (1) is connected to the handlebar (3), and the pedal mechanism (6) is connected with the rear wheel (2) via a chain (8) to drive the rear wheel (2) to rotate;
one end of the support frame (5) is provided thereon with a saddle (7), the other end thereof being connected with the pedal mechanism (6) through a through-hole (451) reserved in the main frame (4), and one end of the main frame (4) is connected with the handlebar (3), the other end thereof being connected with the pedal mechanism (6) via a first rotating shaft (61), such that movement of the support frame (5) along the through-hole (451) brings the pedal mechanism (6) to rotate along the first rotating shaft (61), thereby bringing the peddle mechanism (6) and the main frame (4) close to each other, the first safety clamp (453) being configured to secure relative position between the support frame (5) and the main frame (4); and
a second rotating shaft (41) is disposed between the through-hole (451) and the position where the main frame (4) joins with the handlebar (3), such that the main frame (4) may be bent along the second rotating shaft (41) to bring the front wheel (1) and the rear wheel (2) close to each other, the second safety clamp (432) being configured to secure the main frame (4) to a non-bent state.

2. The folding bicycle of claim 1, wherein the front wheel (1) has a first wheel plate and a second wheel plate, the first wheel plate being foldable till a position parallel to the second wheel plate;
and/or, the rear wheel (2) has a third wheel plate and a fourth wheel plate, the third wheel plate being foldable till a position parallel to the fourth wheel plate.

3. The folding bicycle of claim 1, wherein the main frame (4) comprises:
a head segment (43) connected with the handlebar (3);
a middle segment (44) connected with the head segment (43) via the second rotating shaft (41); and
a tail segment (45) connected with the pedal mechanism (6);
wherein the tail segment (45) has a first socket (452) and is provided with a fastener (454) on a sidewall of the first socket (452), the middle segment (44) being inserted in the first socket (452), wherein an insertion depth of the middle segment (44) in the first socket (452) adjustable via the fastener (454).

4. The folding bicycle of claim 3, wherein the through-hole (451) is provided at the tail segment (45), and two first sockets (452) are provided and disposed at two sides of the through-hole (451), respectively;
wherein the middle segment (44) comprises at least two long rods (441) disposed corresponding to the first sockets (452), respectively.

5. The folding bicycle of claim 4, wherein the middle segment (44) is provided with a connecting platform (442) and a connecting tongue (443) projecting from the connecting platform (442);
the second rotating shaft (41) passes through the connecting tongue (443) to rotatably connect the middle segment (44) to the head segment (43); and
the second safety clamp (432) is disposed on the head segment (43), for fastening and securing the connecting platform (442).

6. The folding bicycle of claim 5, wherein the middle segment (44) further comprises a revolving member (444) that is connected on the connecting platform (442) via a revolving shaft (445), the long rods (441) being connected with the revolving member (444).

7. The folding bicycle of claim 1, wherein the support frame (5) comprises a female rod (52) and a male rod (51), the saddle (7) being disposed on the male rod (51); and
a second socket is provided on the female rod (52), wherein the male rod (51) is inserted in the second socket to connect with the female rod (52).

8. The folding bicycle of claim 7, wherein the female rod (52) comprise a rod base (521) and a rod upper portion (522);
the rod upper portion (522) is connected with the rod base (521) via the third rotating shaft (53), such that when the pedal mechanism (6) is brought flush against the main frame (4), the rod base (521) at least partially exposes the through-hole (451), enabling the rod upper portion (522) to flip relative to the rod base (521) via the third rotating shaft (53).

9. The folding bicycle of claim 7, wherein the male rod (51) is removable from the second socket.

10. The folding bicycle of claim 1, wherein the handlebar (3) comprises a grip portion and a T-section;
the T-section is connected with the front wheel (1) and the main frame (4); and
the grip portion is connected with the T-section via a fourth rotating shaft.

11. The folding bicycle of claim 1, wherein a second gear is provided coaxial with the rear wheel (2);
the pedal mechanism (6) comprises:
a first gear (62), a securing frame (64), and a pedal (63), wherein the pedal (63) is connected on the first gear (62);
the first gear (62) and the second gear are in transmission connection via the chain (8); and
two ends of the securing frame (64) are connected on the first gear (62) and the rear wheel (2), respectively, where the first rotating shaft (61) is disposed at a position on the securing frame (64) proximal to the second gear.
